# EUROPEAN PATENT APPLICATION

(11) **EP 4 592 720 A1**
(43) Date of publication of application: **30.07.2025**
(21) Application number: 24219021.3
(22) Date of filing: 11.12.2024
(51) Int. Cl.: G02B 6/38, G02B 6/54

(54) **OPTICAL FIBER CABLE HAULING SYSTEM**

(30) Priority: 25.01.2024 IN 202411005114
(71) Applicant: Sterlite Technologies Limited, Gurugram, Haryana 122102 (IN)
(72) Inventor: Joshi, Nitin, 122102 Gurugram, Haryana (IN); Gopi, Ajayakumar, 122102 Gurugram, Haryana (IN)
(74) Representative: Petraz, Gilberto Luigi

(57) **Abstract**

Disclosed is an cable hauling system (100) comprising a cable holding assembly (102) defined by a connecter end (102a) and a cable end (102b). Particularly, the cable holding assembly (102) has (i) a connecting sleeve (110) having a first end (110a)with first diameter (D1), a second end (110b) has a second diameter (D2), and (ii) a first crimp (112) having a hollow structure that mates with the first end (110a), and (iii) a second crimp (114) having a hollow structure that mates with the second end (11 0b) of the connecting sleeve (110). Further the connector (104) is engaged at the connector end (102a) of the cable holding assembly (102) and a housing body (106) and is adapted to encapsulate the cable holding assembly (102) and the connector (104).

## Description

### TECHNICAL FIELD

Embodiments of the present disclosure relate to the field of optical telecommunication systems, and more particularly, relates to an optical fiber cable hauling system.

This application claims the benefit of Indian Application No. "202411005114" titled OPTICAL FIBER CABLE HAULING SYSTEM" filed by the applicant on January 25, 2024 which is incorporated herein by reference in its entirety.

### BACKGROUND ART

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fiber refers to the technology and the medium for the transmission of data as light pulses along an ultrapure strand of glass, which is as thin as a human hair. For many years, optical fibers have been extensively used in high-performance and long-distance data and networking. Generally, it is very difficult to install a connectorized optical fiber cable into a narrow space. Sometimes the narrow space may have a small amount of water that can damage the connector during the installation process. Currently, to install a connectorized optical fiber cable into a narrow space, a sleeve with a pulling eye to pull and/or draw the pre-connectorized cable through a narrow space by tying a thread into the pulling eye is utilized. However, after installation, removal of additional components over the pre-connectorized cable is also a challenge. Moreover, improper way to pull the optical fiber cable may affect the termination part of the optical fiber cable assembly which is not desirable.

Prior art reference "US9312676B2" discloses a cable pull assembly with a sealing member and a fixation member. The sealing member and the fixation member coupled together over the optical fiber cable to getting locked and sealed with a pulling housing.

Another prior art reference "US7869685B2" discloses a cable pull assembly having an adapter over the fiber cable that can be coupled with a housing for providing a pulling mechanism. The adapter includes an O-ring to provide sealing to the pulling assembly.

Yet another prior art reference "US8577199B2" discloses a cable hauling assembly having a hauling shroud housing with two parts. The housing includes a seat assembly to grasp the fiber cable.

Yet another prior art reference "WO2009040567A1" discloses a pulling cap assembly having a hauling shroud housing with two parts. The housing includes a protective rubber cap to cover the connector.

Yet another prior art reference "US8165444B2" discloses a retaining sleeve to provide hauling to an optical fiber connector assembly. The retaining sleeve is rotationally locked with the connector assembly.

However, none of the prior art references provides a provision that provides additional strength while hauling the optical fiber cable.

In light of the above stated discussion, to overcome the above stated disadvantages there is a need for an optical fiber cable that is capable of solving aforementioned problems of the conventional optical fiber cable storage devices.

Thus, the present disclosure proposes a technical solution that overcomes the above-stated limitations in the prior arts by providing a cable storage device with a feature to deploy the optical fiber cable in a controlled way with tangling and ripping the spool cover.

### SUMMARY OF THE DISCLOSURE

Embodiments of the present disclosure relates to a cable hauling system comprising a cable holding assembly defined by a connector end and a cable end. The cable holding assembly comprises
a connecting sleeve having a first end with first diameter (D1)and a second end with second diameter (D2),
a first crimp having a hollow structure that mates with the first end of the connecting sleeve over a first mating surface a second crimp having a hollow structure that mates with the second end of the connecting sleeve over a second mating surface such that a flexible tensile element of an optical fiber cable is firmly held between the second mating surface of the connecting sleeve and the second crimp,

a connector engaged at the connector end of the cable holding assembly; and
a housing body adapted to encapsulate the cable holding assembly and the connector.

According to the first aspect of the present disclosure, the housing body comprises a pulling hole disposed at a pulling end.

According to the second aspect of the present disclosure, the first diameter (D1) is less than the second diameter (D2). In particular, the first diameter (D1) is less than a diameter of the optical fiber cable and the second diameter (D2) is greater than or equal to the diameter of the optical fiber cable such that a passage of a jacket of the optical fiber cable through the connector end is restricted while one or more optical fibers of the optical fiber cable are allowed to pass.

According to the third aspect of the present disclosure, the connecting sleeve further comprises one or more radial structures adapted to be engaged with an enclosure. In particular, the one or more radial structures defines a central portion therebetween, where the central portion is rectangular in shape and central portion facilitates in holding of the connected optical fiber cable inside the enclosure.

According to the fourth aspect of the present disclosure, the housing body further comprises a pull cap and an integrated end cap. Further, the pull cap and the integrated end cap engages with each other to encapsulate the cable holding assembly and the connector.

According to the fifth aspect of the present disclosure, the integrated end cap (106b) comprises:
an inner O-ring to provide an inner seal between the integrated end cap and the optical fiber cable; and
external thread to engage the integrated end cap with the housing body.

According to the sixth aspect of the present disclosure, the first mating surface of the connecting sleeve has a knurled surface for gripping. And, the second mating surface of the connecting sleeve has a knurled surface for gripping.

According to the seventh aspect of the present disclosure, the integrated end cap has a tearing slot running at least partially through a length of the integrated end cap to enable breakage of the integrated end cap.

The foregoing objectives of the present disclosure are attained by providing cable hauling system.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating an exploded view of a cable hauling system in accordance with an embodiment of the present disclosure;
Fig. 1B is a pictorial snapshot illustrating another exploded view of the cable hauling system in accordance with an embodiment of the present disclosure;
Fig. 2 is a pictorial snapshot illustrating a side view of a connecting sleeve of the cable hauling system in accordance with an embodiment of the present disclosure;
Fig. 3 is a pictorial snapshot illustrating a side view of a housing body of the cable hauling system in accordance with an embodiment of the present disclosure;
Fig. 4 is a pictorial snapshot illustrating a side view of an integrated end cap of the cable hauling system in accordance with an embodiment of the present disclosure;
Fig. 5A is a pictorial snapshot illustrating a cross-sectional view of the cable hauling system in accordance with an embodiment of the present disclosure;
Fig. 5B is a pictorial snapshot illustrating another cross-sectional view of the cable hauling system in accordance with an embodiment of the present disclosure;
Fig. 6A is a pictorial snapshot illustrating different side view of an installation of the cable hauling system in accordance with an embodiment of the present disclosure;
Fig. 6B is a pictorial snapshot illustrating different side views of an installation of the cable hauling system in accordance with an embodiment of the present disclosure.

The optical fiber hauling system illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

The term "optical fiber" as used herein refers to a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

The term "optical fiber cable" as used herein refers to a cable that encloses a plurality of optical fibers.

The term "SC/APC" as used herein refers to a connector designed for quick installation in the field without fiber polishing. It depends on mechanical fiber splice with precise alignment and matching gel in order to provide quick fiber termination with minimum loss in signal.

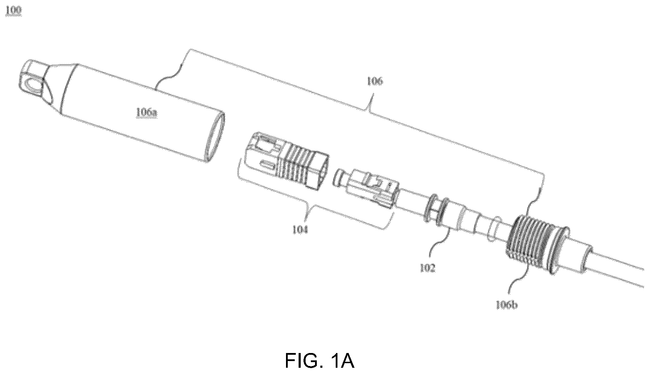

Fig. 1A is a pictorial snapshot illustrating an exploded view of a cable hauling system in accordance with an embodiment of the present disclosure. The optical fiber cable hauling system 100 (hereinafter interchangeably referred to and designated as "the cable hauling system 100") may be adapted for a connectorized optical fiber cable. In particular, the cable hauling system 100 may be adapted to facilitate a passage of an optical fiber cable 500 through narrow spaces such as a duct. Moreover, the cable hauling system 100 may have a cable holding assembly 102, a connector 104, and a housing body 106. Further, the housing body 106 may have a pull cap 106a and an integrated end cap 106b.The integrated end cap 106b provides sealing between the integrated end cap 106b and the optical fiber cable 500 and also gets engaged with the housing body 106. Furthermore, the cable holding assembly 102, the connector 104, and the housing body 106 may be coupled in an assembled configuration to form the cable hauling system 100.

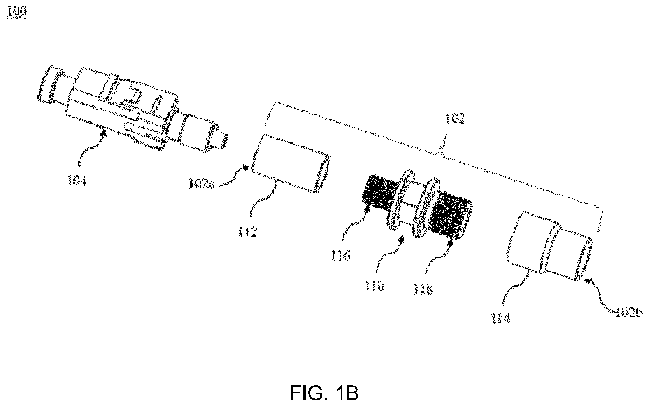

Fig. 1B is a pictorial snapshot illustrating another exploded view of the cable hauling system in accordance with an embodiment of the present disclosure. In particular, the cable hauling system 100 may have the cable holding assembly 102, the connector 104, and the housing body 106. Moreover, the cable holding assembly 102 may be defined by a connector end 102a and a cable end 102b. Further, the cable holding assembly 102 may have a connecting sleeve 110, a first crimp 112, and a second crimp 114. Specifically, the first crimp 112 and the second crimp 114 may be coupled to the connecting sleeve 110 at the connector end 102a and the cable end 102b, respectively, to form the cable holding assembly 102. The connecting sleeve 110 may have a first end and a second end.

The first crimp 112 may have a first end and a second end. In particular, the first crimp 112 may be a cylindrical hollow structure such that the first end of the first crimp 112 is adapted to mate with the first end of the connecting sleeve 110 over a first mating surface 116 of the connecting sleeve 110 such that the first crimp 112 mates with the first end 110a of the connecting sleeve 110 over the first mating surface 116 of the connecting sleeve 110.

In some aspects of the present disclosure, the first mating surface 116 of the connecting sleeve 110 may have a knurled surface for gripping. Further, the first crimp 112 may be adapted to mate with the connector 104 at the other end (*i.e.*, the second end of the first crimp 112).

In accordance with an embodiment of the present disclosure, the first crimp 112 may be made up of a material such as, but not limited to, a hardened plastic, a metal, and the like. Aspects of the present disclosure are intended to include and/or otherwise cover any type of the material for the first crimp 112, known to a person having ordinary skill in the art, without deviating from the scope of the present disclosure.

In accordance with an embodiment of the present disclosure, the first crimp 112 may have a uniform diameter along the length of the first crimp 112.

The second crimp 114 may have a first end and a second end. In particular, the second crimp 114 may be a cylindrical hollow structure such that the first end of the second crimp 114 is adapted to mate with the second end of the connecting sleeve 110 over a second mating surface 118 of the connecting sleeve 110 such that the second crimp 114 mates with the second end 110b of the connecting sleeve 110 over the second mating surface 118 of the connecting sleeve 110. In particular, the first end of the second crimp 114 may be adapted to mate with the second end of the connecting sleeve 110 over the second mating surface 118 of the connecting sleeve 110 such that a flexible tensile element of an optical fiber cable 500 is firmly held between the second mating surface 118 of the connecting sleeve 110.

In accordance with an embodiment of the present disclosure, the second mating surface 118 of the connecting sleeve 110 may have a knurled surface for gripping.

In accordance with an embodiment of the present disclosure, the first end of the second crimp 114 may have a first crimp diameter and the second end may have a second crimp diameter such that the first crimp diameter is greater than the second crimp diameter.

Further, the second crimp 114 may be made up of a material such as, but not limited to, a hardened plastic, a metal, and the like. Aspects of the present disclosure are intended to include and/or otherwise cover any type of the material for the second crimp 114, known to a person having ordinary skill in the art, without deviating from the scope of the present disclosure.

In accordance with an embodiment of the present disclosure, the connecting sleeve 110 with first and second crimps 112 and 114 at both ends may facilitate to connectorized the optical fiber cable 500 and provide additional strength while pulling the optical fiber cable 500.

Further, the connector 104 may be engaged at the connector end 102a of the cable holding assembly 102. Specifically, the connector 104 may be crimped with the connecting sleeve 110 (crimped with the optical fiber cable 500) with first crimp 112.

In accordance with an embodiment of the present disclosure, the connector 104 may be a standard connector/angle polished connector (SC-APC).

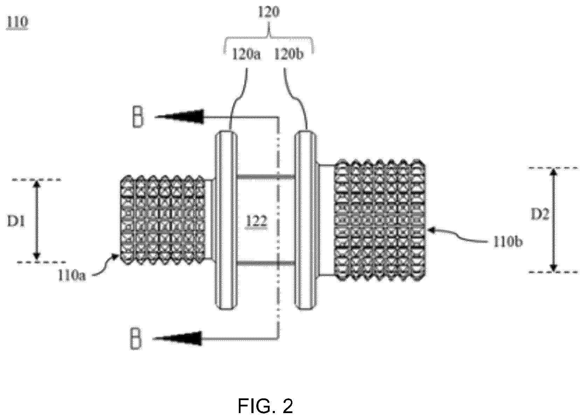

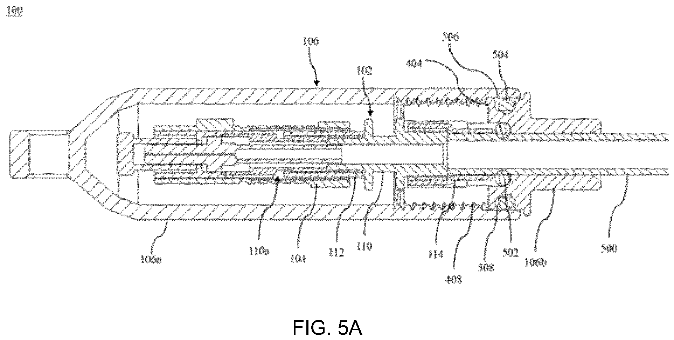

Fig. 2 is a pictorial snapshot illustrating a side view of a connecting sleeve of the cable hauling system in accordance with an embodiment of the present disclosure. The connecting sleeve 110 may have a first end 110a and the second end 110b. In particular, the first end 110a may have a first diameter (D1) and the second end 110b may have a second diameter (D2). Moreover, the first diameter (D1) may be less than the second diameter (D2). Further, the first diameter (D1) may be less than a diameter of an optical fiber cable (*e.g.*, the optical fiber cable 500 (as shown later in FIG. 5A)) that may be inserted in the connecting sleeve 110.

Furthermore, the second diameter (D2) may be greater than or equal to the diameter of the optical fiber cable. Specifically, the first diameter (D1) may be less than the diameter of the optical fiber cable and the second diameter (D2) may be greater than or equal to the diameter of the optical fiber cable such that a jacket of the optical fiber cable cannot pass through the connector end 102a of the cable holding assembly 102 while one or more optical fibers of the optical fiber cable are allowed to pass.

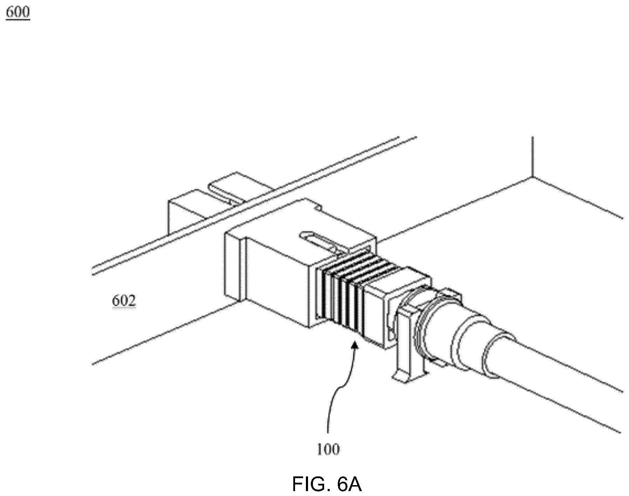

In accordance with an embodiment of the present disclosure, the connecting sleeve 110 may further have one or more radial structures 120 of which first and second radial structures 120a and 120b are shown. In particular, the first and second radial structures 120a and 120b may be circular disc shaped structures that may encircle the connecting sleeve 110. The one or more radial structures 120 (*i.e.*, the first and second radial structures 120a and 120b) may be adapted to be engaged with an enclosure 602 (as shown later in FIG. 6A). Moreover, the one or more radial structures 120 (*i.e.*, the first and second radial structures 120a and 120b) may define a central portion 122 therebetween. Further, the central portion 122 may be defined between the one or more radial structures 120 (*i.e.*, the first and second radial structures 120a and 120b) such that an outer parameter of the connecting sleeve 110 between the one or more radial structures 120 (*i.e.*, the central portion 122) may be rectangular in shape. Furthermore, the central portion 122 having the rectangular outer surface may be adapted to be engaged between one or more mounting tabs (not shown) provided in the enclosure 602.

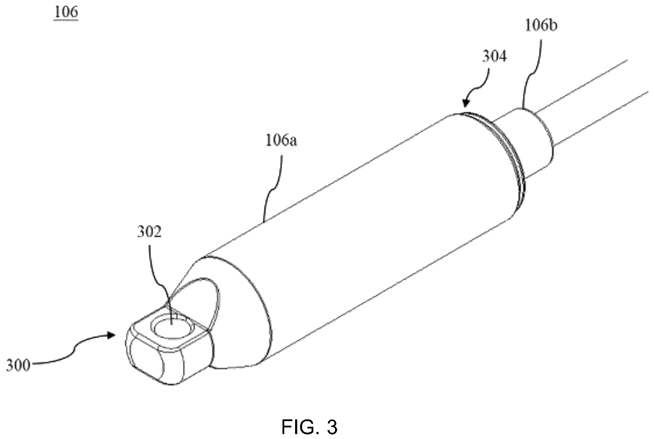

Fig. 3 is a pictorial snapshot illustrating a side view of a housing body of the cable hauling system in accordance with an embodiment of the present disclosure. The housing body 106 may have the pull cap 106a and the integrated end cap 106b. Particularly, the pull cap 106a and the integrated end cap 106b may be adapted to engage with each other to encapsulate the cable holding assembly 102 and the connector 104. Moreover, the housing body 106 may be adapted to encapsulate the cable holding assembly 102 and the connector 104. Further, the housing body 106 may be a hollow structure that may be adapted to accept the cable holding assembly 102 and the connector 104 in the assembled configuration of the cable hauling system 100.

In accordance with an embodiment of the present disclosure, the housing body 106 may have a pulling end 300 that has a pulling hole 302. In particular, the pull cap 106a may have the pulling end 300 and an open end 304 such that the pulling end 300 has the pulling hole 302. Moreover, the pulling hole 302 may facilitate hauling of the housing body 106.

In accordance with an embodiment of the present disclosure, the open end 304 may have internal threads (not shown) for locking the integrated end cap 106b therein. Further, the pull cap 106a may be made up of a material such as, but not limited to, a hardened plastic, a metal, and the like. Aspects of the present disclosure are intended to include and/or otherwise cover any type of the material for the pull cap 106a, known to a person having ordinary skill in the art, without deviating from the scope of the present disclosure.

In accordance with an embodiment of the present disclosure, the housing body 106 may have a length in a range of 66 millimetres (mm) to 78 mm. Preferably, the length of the housing body 106 may be 72 mm.

In accordance with an embodiment of the present disclosure, the pull cap 106a may have a length in a range of 60 millimetres (mm) to 70 mm. Preferably, the length of the housing body 106 may be 66 mm.

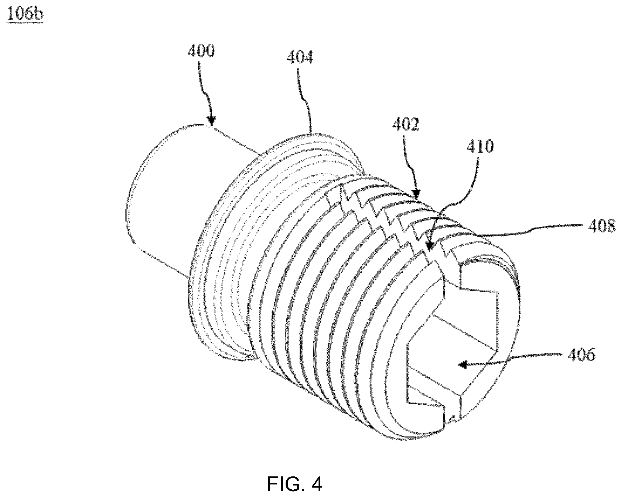

Fig. 4 is a pictorial snapshot illustrating a side view of an integrated end cap of the cable hauling system in accordance with an embodiment of the present disclosure. The integrated end cap 106 may have a first portion 400 and a second portion 402. In particular, the first portion 400 and the second portion 402 may be separated by a separation ring 404. The separation ring 404 may be a circular structure that may be disposed along a periphery of the integrated end cap 106b to separate the first and second portion 400 and 402. Moreover, the integrated end cap 106b may be a cylindrical shaped structure that has a through hole 406 running along a length of the integrated end cap 106b such that the through hole 406 facilitates to slidably connect the integrated end cap 106b over an optical fiber cable (*e.g.*, the optical fiber cable 500 (as shown later in FIG. 5A)) at a distance from the connecting sleeve 110 (as shown in FIG. 1A). Further, the integrated end cap 106b may be slidably connected to the optical fiber cable and engaged with the pull cap 106a to form the housing body 106.

In accordance with an embodiment of the present disclosure, the integrated end cap 106b may have external threads 408 disposed along a length of the second portion 402 such that the external threads 408 are engaged with the internal threads of the pull cap 106a to lock the integrated end cap 106b and the pull cap 106a to form the housing body 106.

In accordance with an embodiment of the present disclosure, the integrated end cap 106b may have a tearing slot 410 running at least partially through the length of the integrated end cap 106b. Particularly, the tearing slot 410 may be adapted to enable breakage of the integrated end cap 106b after installation of the connector 104 inside the enclosure 602.

In accordance with an embodiment of the present disclosure, the integrated end cap 106b may have a solid body without any slots.

Fig. 5A is a pictorial snapshot illustrating a cross-sectional view of the cable hauling system in accordance with an embodiment of the present disclosure. As illustrated, the cable hauling system 100 has the cable holding assembly 102, the connector 104, and the housing body 106 such that the cable holding assembly 102, the connector 104, and the housing body 106 are coupled in the assembled configuration to form the cable hauling system 100. The connecting sleeve 110 having the first and second crimps 112 and 114 may receive the optical fiber cable 500 such that the connecting sleeve 110 with first and second crimps 112 and 114 at both ends facilitates to connectorized the optical fiber cable and provide additional strength while pulling the optical fiber cable. The connecting sleeve 110 may have the first end 110a and the second end 110b. Further, the first end 110a may have the first diameter (D1) and the second end 110b may have the second diameter (D2).

In accordance with an embodiment of the present disclosure, the first diameter (D1) may be less than the second diameter (D2). In some aspects of the present disclosure, the first diameter (D1) may be less than a diameter of the optical fiber cable 500 that may be inserted in the connecting sleeve 110. Further, the second diameter (D2) may be greater than or equal to the diameter of the optical fiber cable.

Particularly, the first diameter (D1) may be less than the diameter of the optical fiber cable and the second diameter (D2) may be greater than or equal to the diameter of the optical fiber cable such that a jacket of the optical fiber cable cannot pass through the connector end 102a of the cable holding assembly 102 while one or more optical fibers of the optical fiber cable are allowed to pass.

The integrated end cap 106b may be slidably connected to the optical fiber cable 500 and engaged with the pull cap 106a to form the housing body 106.

In accordance with an embodiment of the present disclosure, the integrated end cap 106b may have the external threads 408 such that the external threads 408 are engaged with the internal threads of the pull cap 106a to lock the integrated end cap 106b and the pull cap 106a to form the housing body 106.

In accordance with an embodiment of the present disclosure, the integrated end cap 106b may have an inner O-ring 502 that provides an inner seal between the integrated end cap 106b and the optical fiber cable 500 that is inserted inside the through hole 406. Further, the integrated end cap 106b may have an outer O-ring 504 that provides an outer seal between the end cap 106b and an inner surface 506 of the pull cap 106a when the integrated end cap 106b is slidably connected to the pull cap 106a.

In accordance with an embodiment of the present disclosure, the integrated end cap 106b may have a slot 508 that runs parallel to the separation ring 404 along the periphery of the integrated end cap 106b such that the slot 508 is adapted to accept the outer O-ring 504 that provides an outer seal between the integrated end cap 106b and an inner surface 506 of the pull cap 106a to prevent water ingress inside the housing body 106.

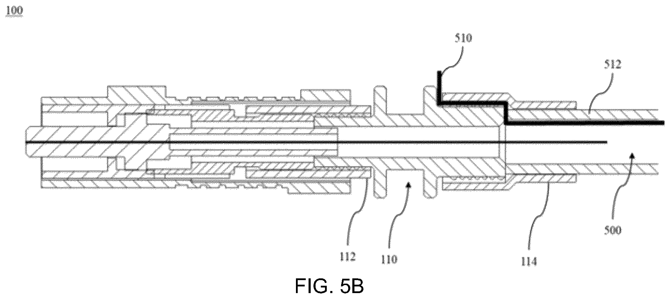

Fig. 5B is a pictorial snapshot illustrating another cross-sectional view of the cable hauling system in accordance with an embodiment of the present disclosure. The cable hauling system 100 has the cable holding assembly 102 and the connector 104 such that the cable holding assembly 102, the connector 104, and the housing body 106 are coupled in the assembled configuration to form the cable hauling system 100. The connecting sleeve 110 having the first and second crimps 112 and 114 may receive an optical fiber cable 500 such that the connecting sleeve 110 facilitate to hold the optical fiber cable 500 firmly while crimping an aramid yarn 510 (specifically, the aramid yarn 510 may be flared outside of the connecting sleeve 110 as illustrated) and a jacket 512 of the optical fiber cable 500 when the optical fiber cable 500 is pulled by way of the pull cap 106a of the housing body 106.

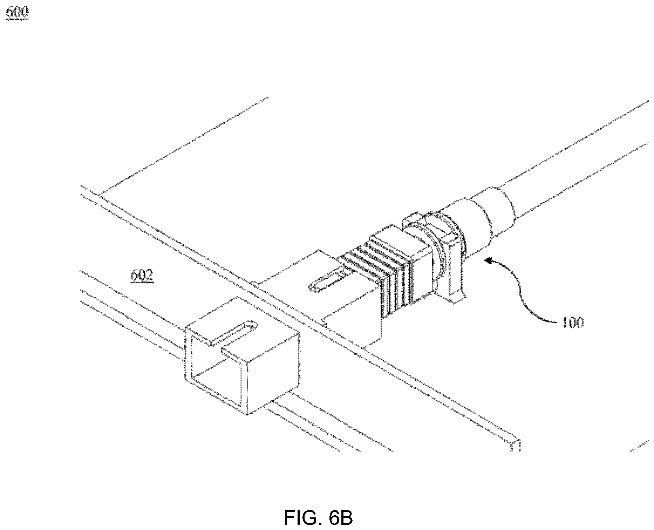

Fig. 6A and Fig. 6B are pictorial snapshots illustrating different side views of an installation 600 of the cable hauling system 100 onto the enclosure 602 in accordance with different embodiments of the present disclosure. The one or more radial structures 120 (*i.e.*, the first and second radial structures 120a and 120b) of the connecting sleeve 110 may be adapted to be engaged with the enclosure 602.

In accordance with an embodiment of the present disclosure, the one or more radial structures 120 (*i.e.*, the first and second radial structures 120a and 120b) may define the central portion 122 (*i.e.*, a groove) therebetween such that central portion 122 is rectangular in shape. Particularly, the central portion 122 (*i.e.*, a groove) facilitates in holding of the connected optical fiber cable 500 inside the enclosure 602.

Advantageously, the cable hauling system 100 of the present disclosure provides the connector sleeve 110 with two crimps at both ends (*i.e.*, the first and second crimp 112 and 114) used to connectorized the optical fiber cable 500 thereby providing additional strength while pulling the optical fiber cable 500. Moreover, the cable hauling system 100 has the housing body 106 that has the integrated end cap 106b such that the integrated end cap 106b can be removed after installation of the cable hauling system 100 within the enclosure 602 to minimize space.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A cable hauling system (100) **characterized in that**:
a cable holding assembly (102) defined by a connecter end (102a) and a cable end (102b), wherein the cable holding assembly (102) comprising:
a connecting sleeve (110) having a first end (110a) and a second end (110b),
wherein the first end (110a) has a first diameter (D1), and the second end (110b) has a second diameter (D2);
a first crimp (112) having a hollow structure that mates with the first end (110a) of the connecting sleeve (110) over a first mating surface (116);
a second crimp (114) having a hollow structure that mates with the second end (110b) of the connecting sleeve (110) over a second mating surface (118) such that a flexible tensile element of an optical fiber cable (500) is firmly held between the second mating surface (118) of the connecting sleeve (110) and the second crimp (114);
a connector (104) engaged at the connector end (102a) of the cable holding assembly (102); and
a housing body (106) adapted to encapsulate the cable holding assembly (102) and the connector (104).

2. The cable hauling system (100) as claimed in claim 1, wherein the housing body (106) comprising a pulling hole (302) disposed at a pulling end (300).

3. The cable hauling system (100) as claimed in claim 1, wherein the first diameter (D1) is less than the second diameter (D2).

4. The cable hauling system (100) as claimed in claim 1, wherein the first diameter (D1) is less than a diameter of the optical fiber cable (500) and the second diameter (D2) is greater than or equal to the diameter of the optical fiber cable (500) such that a passage of a jacket of the optical fiber cable (500) through the connector end (102a) is restricted while one or more optical fibers of the optical fiber cable (500) are allowed to pass.

5. The cable hauling system (100) as claimed in claim 1, wherein the connecting sleeve (110) further comprising one or more radial structures (120) adapted to be engaged with an enclosure (602).

6. The cable hauling system (100) as claimed in claim 1, wherein the one or more radial structures (120) defines a central portion (122) therebetween.

7. The cable hauling system (100) as claimed in claim 1, wherein the central portion (122) is rectangular in shape and central portion (122) facilitates in holding of the connected optical fiber cable (500) inside the enclosure (602).

8. The cable hauling system (100) as claimed in claim 1, wherein the housing body (106) further comprising a pull cap (106a) and an integrated end cap (106b).

9. The cable hauling system (100) as claimed in claim 1, wherein the pull cap (106a) and the integrated end cap (106b) engages with each other to encapsulate the cable holding assembly (102) and the connector (104).

10. The cable hauling system (100) as claimed in claim 1, wherein the integrated end cap (106b) comprising:
an inner O-ring (502) to provide an inner seal between the integrated end cap 106b and the optical fiber cable (500); and
external thread (408) to engage the integrated end cap (106b) with the housing body (106).

11. The cable hauling system (100) as claimed in claim 1, wherein the first mating surface (116) of the connecting sleeve (110) has knurled surface for gripping

12. The cable hauling system (100) as claimed in claim 1, wherein the second mating surface (118) of the connecting sleeve (110) has a knurled surface for gripping.

13. The cable hauling system (100) as claimed in claim 1, wherein the integrated end cap (106b) has a tearing slot (410) running at least partially though a length of the integrated end cap (106b) to enable breakage of the integrated end cap (106b).

14. A cable hauling system (100) **characterized in that**:
a cable holding assembly (102) defined by a connecter end (102a) and a cable end (102b), wherein the cable holding assembly (102) comprising:
a connecting sleeve (110) having a first end (110a) and a second end (110b),
a first crimp (112) having a hollow structure that mates with the first end (110a) of the connecting sleeve (110) over a first mating surface (116);
a second crimp (114) having a hollow structure that mates with the second end (110b) of the connecting sleeve (110) over a second mating surface (118) such that a flexible tensile element of an optical fiber cable (500) is firmly held between the second mating surface (118) of the connecting sleeve (110) and the second crimp (114);
a connector (104) engaged at the connector end (102a) of the cable holding assembly (102); and
a housing body (106) adapted to encapsulate the cable holding assembly (102) and the connector (104).

15. The cable hauling system (100) as claimed in claim 14, wherein the first end (110a) has a first diameter (D1), and the second end (110b) has a second diameter (D2).
